# EUROPEAN PATENT SPECIFICATION

(11) **EP 2 236 523 B1**
(45) Date of publication and mention of the grant of the patent: **21.02.2018**
(21) Application number: 09004561.8
(22) Date of filing: 30.03.2009
(51) Int. Cl.: C08B 37/00, C08L 5/08, C08B 37/08

(54) **Method for producing cross-linked hyaluronic acid**
Verfahren zur Herstellung vernetzter Hyaluronsäure
Procédé de production d'acide hyaluronique réticulé

(43) Date of publication of application: 06.10.2010
(73) Proprietor: Scivision Biotech Inc., Qianzhen D Kaohsiung (TW)
(72) Inventor: Chen, Tor-Chern, Pingtung City Pingtung Hsien (TW); Chen, Li-Su, Nanzi District (TW)
(74) Representative: Straus, Alexander

(56) References cited:
- EP-A1- 0 939 086
- EP-A1- 1 818 344
- US-A- 4 716 154
- US-A1- 2002 049 281
- US-A1- 2006 246 137
- JINGHUA ET AL: "Characteristic of hyaluronic acid derivative films cross-linked by polyethylene glycol of low water content" JOURNAL OF MEDICAL COLLEGES OF PLA, SHANGHAI, CN, vol. 23, no. 1, 1 February 2008 (2008-02-01), pages 15-19, XP022535643 ISSN: 1000-1948
- TOMIHATA K ET AL: "Preparation of cross-linked hyaluronic acid films of low water content" BIOMATERIALS, ELSEVIER SCIENCE PUBLISHERS BV., BARKING, GB, vol. 18, no. 3, 1 February 1997 (1997-02-01), pages 189-195, XP004015286 ISSN: 0142-9612

## Description

### BACKGROUND OF THE INVENTION

The present invention relates to a method for producing cross-linked hyaluronic acid, especially producing cross-linking hyaluronic acid with decreased cross-linking agent content.

Hyaluronic acid is a kind of polysaccharides, is composed of disaccharides and 400 D of molecular weight. The disaccharide is composed of β-1,4-glucuronic acid and β-1,3-N-acetylglucosamine linked together by β-1,4 glycosidic bond. Moreover, the disaccharide links other disaccharides by β-1,3 glycosidic bonds to form linear polysaccharide. Currently, hyaluronic acid is synthesized by bacteria such as *streptococcus* and obtained by extracted from animal tissue such as cockscomb.

Since hyaluronic acid, hyaluronate and derivatives thereof have good biocompatibility, bio-degradability and viscoelasticity, so can be used in cosmetics, biomedicine, medical products and pharmaceutical industry.

Since linear hyaluronic acid in organisms is easily degraded by enzymes, such as hyaluronidase and free radicals, residence time of linear hyaluronic acids in organisms is shortened. Furthermore, linear hyaluronic acid has low mechanical strength, so the linear hyaluronic acid has limited applications. Therefore, the cross-linked hyaluronic acid is most preferably used.

In practical operating method, the cross-linked hyaluronic acid have different type to the different goal, such as a solution type, a hydrogel type, a matter between a solution type and hydrogel type or a mixture consisting of a solution type and a hydrogel type. A manufacture method for producing cross-linked hyaluronic acid comprises steps of: mixing a cross-linking agent and hyaluronic acid to proceed a cross-linking reaction and obtain cross-linked hyaluronic acid; and purifying the cross-linked hyaluronic acid to remove the excess cross-linking agent. The step of purifying the cross-linked hyaluronic acid may be by dialysis or washing with water or a buffer solution. However, the above-mentioned dialysis or washing cannot remove all of the residual cross-linking agent, which has a bonding-state end and a free-state end especially. Further, the free-state end of the cross-linking agent still has activity and undesired side effects when applied in animals, as shown by U.S. 5,808,050.

Also, the manufacture method for purifying cross-linked hyaluronic acid by dialysis or washing also suffers from the following difficulties:
1. Refining is not easily scaled up in industry.
2. The cross-linked hyaluronic acid requires sterile conditions otherwise contaminants are easily integrated into a final product. However, the manufacture method for purifying cross-linked hyaluronic acid by dialysis or washing is under neutral or almost neutral condition, so sterile conditions are difficult to be controlled.
3. When the cross-linked hyaluronic acid is hydrogel, cross-linked hyaluronic acid with low degree of cross-linking swells significantly, so the cross-linked hyaluronic acid is difficult to be washed and the cross-linked hyaluronic acid may be lost easily during washing. Similarly, when the cross-linked hyaluronic acid, cross-linked hyaluronic acid with high degree of cross-linking swells insignificantly, the cross-linking agent is hard to be removed.
4. Moreover, the cross-linked hyaluronic acid with low degree of cross-linking is easily washed away when washing the cross-linked hyaluronic acid, so residual cross-linked hyaluronic acid has decreased lubrication. Therefore, when the cross-linked hyaluronic acid is used for injection, stright-chain or cross-linked hyaluronic acid solution has to be added in the residual cross-linked hyaluronic acid to increase lubrication.

Examples of conventional methods for producing cross-linked hyaluronic acid are disclosed in the following documents:
1. Jinghua et al. ("Characteristics of hyaluronic acid derivative films cross-linked by polyethylene-glycol of low water content" Journal of Medical Colleges of Pla, Shanghai, CN, Vol. 23, No. 1, 1 FGebruary 2008, p. 15-19).
2. Tomihata K et al. ("Preparation of cross-linked hyaluronic acid films of low water content" Biomaterials, Elsevier Science Publishers BV., Barking, GB, Vol. 18, No. 3, 1 February 1997, p. 189-195.
3. US 2002/049281 A1.

U.S. 4,716,154 discloses a manufacture method for a gel of cross-linked hyaluronic acid for use as a vitreous humor substitute. Comprising steps of: cross-Inking a hyaluronate and multifunctional cross-linking agent at 50°C for two hours under alkaline condition and placing overnight at room temperature to obtain a gel; for removing un-reacted cross-linking agent, cutting the gel into small pieces and washing thoroughly for 24-hours using distilled water and further washing for 8 hours by boiled saline water to obtain gel with 0.23% -1.2% of solid content. However, the foregoing method has following shortcomings:
( 1) a complex purifying step is required;
( 2) the gel can become swelling and the gel content is low for removing cross-linking agent with boiled saline water and attaining gel. Therefore, the process have to extra step to improve the gel content; and
( 3) the cross-linked hyaluronic acid has to swell again in the buffer solution to adjust osmotic pressure and pH value so that the method is unsuitable conducted in industry.

US 2006/094758A1 discloses cross-linking of low and high molecular weight hyaluronic acid to obtain monophase hydrogels. The monophase hydrogels have good mechanical strength with improved properties for injection. However, the monophase hydrogels have residual cross-linking agent over 300 ppm after cross linking reaction at 50°C . Then, the residual cross-linking agent is intended to be removed by dialysis but the cross-linking agent cannot be removed thoroughly. Therefore, neither un-reacted cross-linking agent with two free-state ends nor reacted cross-linking agent with one free-state end and one bonding-state end in the hydrogels cannot be removed by dialysis or washing.

US 2005/0281880A1 discloses methods for making injectable polymer hydrogels, comprising steps of: (a) cross-linking one or more polymers to form a gel; (b) washing the gel; (c) purifying the gel; and (d) homogenizing the gel to produce the hydrogel. The method uses a di-functional or multifunctional cross-linking agent with high concentration to manufacture hydrogel. Therefore, the above-mentioned hydrogel contains residual cross-linking agents. Moreover, the hydrogel needs 2 to 3 days to wash and purify the gel. However, the hydrogel is under almost neutral condition and may be polluted by microorganism.

US 2007/0026070A1 discloses a method for manufacturing a cross-linked polysaccharide composition comprising steps of: (a) contacting a polysaccharide mixed in an alkaline medium with a bifunctional or polyfunctional epoxide to provide an essentially epoxy cross-linked polysaccharide, wherein the epoxide is substantially linked to the polysaccharide by ether bonds; (b) drying the epoxy cross-linked polysaccharide without substantially removing epoxide from the alkaline medium to form a cross-linked polysaccharide matrix; (c) optionally washing the cross-linked polysaccharide matrix with a water miscible solvent; and (d) neutralising the cross-linked polysaccharide matrix with an acidic medium to form a cross-linked polysaccharide gel. Therefore, the method forms a product having residual cross-linking agents.

U.S. 4,716,224 discloses a method of manufacturing cross-linked hyaluronic acid using precipitation to remove the cross-linking agent. However, the method forms a product still having residual cross-linking agents.

When cross-linking polymers to form a gel in an alkaline medium, the cross-linking reaction competes with a hydrolysis reaction as shown by Y. Tokita and A. Okamoto, "Hydrolytic Degration of Hyaluronic Acid", Polymer Degration and Stability, vol. 48, pp. 269-273 (1995). In the initial reaction period, the concentration of the cross-linking agent is high, so the cross-linking reaction is the principal reaction. But, as a specific amount of the cross-linking agent is consumed, the hydrolysis reaction becomes the principal reaction and destroys the gel causing gel degradation. Therefore, the cross-linking reaction in an alkaline medium has to be terminated before such side reactions occur, despite the gel remaining much residual cross-linking agent. The manufacturing method comprises step of: cross-linking a hyaluronate and di-functional or multi-functional cross-linking agent in 25 to 60°C for between 10 minutes and 24 hours under basic condition to obtain a gel; and purifying the gel to remove cross-linking agents. However, the cross-linking agent cannot be removed thoroughly. An actual reaction time relates to temperature and basic condition. No matter the gel obtained in foregoing method proceeds purification or not, a certain amount of or a significant amount of cross-linking agents still remained in the cross-linked hyaluronic acid.

To overcome the shortcomings, the present invention provides a method for producing cross-linked hyaluronic acid to mitigate or obviate the aforementioned problems.

### SUMMARY OF THE INVENTION

The main objective of the present invention is to provide a method for producing cross-linked hyaluronic acid with decreased cross-linking agent.

A method for producing cross-linked hyaluronic acid in accordance with the present invention comprises a) cross-linking a polymer at high temperature from 35 to 60°C, and b) cross-linking the polymer at a low temperature, between 10 to 30°C, for a reaction time greater than 48 hours with a cross-linking agent to form a cross-linked hyaluronic acid under basic conditions prepared by an inorganic base with a concentration from 0.2 N to 1.5 N, wherein step a) is conducted before step b), and wherein the polymer is selected from the group consisting of hyaluronic acid, hyaluronate, and a mixture thereof. The method is absent of a step of purifying the cross-linked hyaluronic acid since the method of the invention lowers a concentration of cross-linking agents with free-state functional group in a product so reduces need for purification.

Other objectives, advantages and novel features of the invention will become more apparent from the following detailed description.

### DETAILED DESCRIPTION OF THE PREFERRED EMBODIMENTS

In describing and claiming the present invention, the following terminology will be used according to the definitions as below.

The "hyaluronate" is a hyaluronic acid composed of a metal ion.

The molecular weight of hyaluronic acid, hyaluronate, derivatives thereof and a mixture thereof is not limited in the invention, and can refer to low molecular weight, high molecular weight or a mixture having low and high molecular weight of hyaluronic acid, hyaluronate, derivatives thereof, such as below 100,000 D; from 100,000 to 500,000 D; from 500,000 to 1,000,000 D; from 1,000,000 to 1,500,000 D; from 1,500,000 to 2,000,000 D, from 2,500,000 to 3,000,000 D or the like.

The "cross-linked hyaluronic acid" is a network-structured polymer after hyaluronic acid, hyaluronate or a mixture thereof partially crosslinked or thoroughly crosslinked by cross-linking agent. The cross-linked hyaluronic acid may be solid, liquid (when the cross-linked hyaluronic acid is dissolved in water or buffer solution), hydrogel (when the cross-linked hyaluronic acid swells in water or buffer solution), a mixture between liquid and hydrogel or water-insoluble solid. Types of the cross-linked hyaluronic acid depends on cross-linked agent content and method used for manufacturing the cross-linked hyaluronic acid. In the present invention, the cross-linked hyaluronic acid may be solid, liquid, hydrogel or a mixture of which solid and liquid. The solid cross-linked hyaluronic acid may be particle, spongy, strip, spherical, elliptical or the like.

In the cross-linking reaction, two of hyaluronic acid, hyaluronate or a mixture thereof form chemical bond such as ether bond in the present invention between two straight chains without producing by-product so a cross-linking reaction is theoretically proceeded completely. The "cross-linking agent with a free-state functional group" indicates that the cross-linking agent at least one function group is un-reacted with hyaluronic acid, hyaluronate, derivatives thereof or a mixture thereof.

The method of the invention can be produced under specific conditions (e.g. sterile condition), or common conditions. Because the method uses basic conditions, bacterium does not grow, therefore, avoiding risks of contamination caused by washing hydrogel.

A method for producing cross-linked hyaluronic acid in accordance with the present invention comprises a) cross-linking a polymer at high temperature from 35 to 60°C, and b)cross-linking the polymer at low temperature from 10 to 30°C for a reaction time greater than 48 hours with a cross-linking agent to form a cross-linked hyaluronic acid under basic conditions prepared by an inorganic base with a concentration from 0.2 N to 1.5 N, wherein step a) is conducted before step b), wherein step a) is conducted before step b), and wherein the polymer is selected from the group consisting of hyaluronic acid, hyaluronate and a mixture thereof. The method is absent of a step of purifying the cross-linked hyaluronic acid. The method for producing cross-linked hyaluronic acid comprises a cross-linking reaction at high temperature from 35 to 60°C before the step of cross-linking at low temperature. More preferably, the high temperature is from 35 to 50°C . Most preferably, the high temperature is from 35 to 40°C. This allows partial cross-linking of the polymer before deterioration begins.

Preferably, when the high temperature is 35°C, the cross-linking reaction is proceeded for less than 72 hours; more preferably from 4 to 48 hours; most preferably from 6 to 12 hours.

Preferably, when the high temperature is 40°C, the cross-linking reaction is proceeded for less than 48 hours; more preferably from 2 to 24 hours; most preferably from 3 to 6 hours.

Preferably, when the high temperature is 50°C, the cross-linking reaction is proceeded for less than 8 hours; more preferably from 0.1 to 2 hours; most preferably proceed from 0.2 to 1 hour.

Preferably, when the high temperature is 60°C, the cross-linking reaction is proceeded for less than 2 hours; more preferably from 0.1 to 0.5 hour; most preferably from 0.2 to 0.3 hour.

Preferably, the method for producing cross-linked hyaluronic acid further comprises diluting the cross-linked hyaluronic acid step after the step of cross-linking at low temperature. Diluting the cross-linked hyaluronic acid for adjusting the cross-linked hyaluronic acid to a desired concentration and acceptable osmotic pressure and pH value in animal physiology, and may comprise dilution using water, neutral solution, buffer solution, salt solution or a mixture thereof.

For example, a preferable concentration of the cross-linked hyaluronic acid is from 5 mg/mL to 60 mg/mL, more preferably from 10 mg/mL to 40 mg/mL, most preferably from 20 mg/mL to 30 mg/mL, and a preferable osmotic pressure is from 280 to 340 mOsm/kg.

Preferably, the method for producing cross-linked hyaluronic acid further comprises a step of neutralizing cross-linking reaction environment step after the step of cross-linking at low temperature for neutralizing original non-neutral reaction environment to a neutral reaction environment with pH value preferably between 6.5 and 7.5 to be used with animals. Neutralizing cross-linking reaction environment step and diluting the cross-linked hyaluronic acid step may be conducted simultaneously.

Preferably, the method for producing cross-linked hyaluronic acid further has a step of homogenizing the cross-linked hyaluronic acid step after the step of cross-linking at low temperature to form a dispersing particle.

Preferably, the hyaluronate is selected from the group consisting of sodium hyaluronate, potassium hyaluronate and zinc hyaluronate.

Preferably, the inorganic acid is selected from the group consisting of sodium hydroxide, potassium hydroxide and a mixture thereof.

Preferably, the basic condition is in a concentration of 0.2 N to 0.5 N. More preferably, the concentration is 0.25 N to 0.5N.

Preferably, the cross-linking agent is a multifunctional cross-linking agent.

More preferably, the cross-linking agent is a di-functional cross-linking agent.

Preferably, the cross-linking agent is selected from the group consisting of 1,4-butanediol diglycidyl ether, ethylene glycol diglycidyl ether, 1,6-hexanediol diglycidyl ether, polypropylene glycol diglycidyl ether, polytetramethylene glycol diglycidyl ether, neopentyl glycol diglycidyl ether, polyglycerol polyglycidyl ester, diglycerol polyglycidyl ether, glycerol polyglycidyl ether, trimethylolpropane polyglycidyl ether, pentaerythritol polyglyglycidyl ether, sorbitol polyglycidyl ether, 1,2,7,8-diepoxyoctane, 1,3-butadiene diepoxide and a mixture thereof.

Preferably, a concentration of the cross-linking agent is from 0.05 to 2 w/v %. More preferably, a concentration of the cross-linking agent is from 0.1 to 1.5 w/v %. More preferably, a concentration of the cross-linking agent is from 0.1 to 1.0 w/v %. Most preferably, a concentration of the cross-linking agent is from 0.6 to 1.0 w/v %.

Preferably, the low temperature is from 15 to 30°C . More preferably, the low temperature is from 20 to 30°C. Since hydrolysis of cross-linked hyaluronic acid does not occur under basic conditions at low temperature, cross-linked hyaluronic acid will not suffer from rapidly deterioration and the cross-linking reaction will terminate when the cross-linking agent is consumed to a reasonable concentration.

Said deterioration in the cross-linked hyaluronic acid can cause the cross-linked hyaluronic acid to turn deep yellow or deep brown after cross-linking reaction due to hydrolysis of cross-linked hyaluronic acid under basic conditions or causes a final product to degrade obviously. In the present invention, the deterioration is not limited in light yellow or light brown because the cross-linked hyaluronic acid being light yellow or light brown can be used.

Consuming cross-linking agent within a reasonable concentration indicates that the concentration of the cross-linking agent in the cross-linked product can be used in following steps such as below 1 ppm, 2 ppm, 5 ppm, 10 ppm, 15 ppm or 20 ppm. However, the consuming concentration of the cross-linking agent is not intended to limit the scope of the present invention. The cross-linking agent is consumed resulting not only from cross-linking reaction but also from hydrolysis reaction. Un-reacted cross-linking agent can be controlled below 1 ppm, 2 ppm, 2 to 5 ppm, 10 ppm, 10 to 15 ppm or 15 to 20 ppm.

Preferably, the reaction time is from 3 to 28 days. More preferably, the reaction time is from 3 to 11 days. Most preferably, the reaction time is from 3 to 7 days. The reaction time relates to a concentration of the cross-linking agent and base and the reaction temperature.

Preferably, a reactant initial concentration of polymer is 2 to 40 w/v %. More preferably, a concentration of polymer is 10 to 30 w/v %. Most preferably, a concentration of polymer is 15 to 20 w/v %.

The following examples further illustrate the present invention but are not to be construed as limiting the invention as defined in the claims appended hereto.

EXAMPLE 1: Sodium hyaluronate concentration of 20 w/v %, base concentration of 0.5 N, low reaction temperature of 30°C and cross-linking agent (1,2,7,8-diepoxyoctane) concentration of 1 v/v %.

8.9 mL of deionized water was added into 1 mL of 5N sodium hydroxide solution, 0.1 mL of 1,2,7,8-diepoxyoctane and 2 g sodium hyaluronate (dry weight) of high molecular weight hyaluronic acid, (HHA, average molecular weight 1,350,000) under constant stirring by a magnetic stirring bar at room temperature for 5 minutes and placed in a thermostatic container held at 30°C for various reaction times as shown in table 1.

The cross-linked hyaluronic acid was added to 79.2 mL of pH 7.0±0.2 of 0.073 M phosphate buffer solution and 0.8 mL of 6 N hydrogen chloride solution to regulate pH value and osmotic pressure adjusted to suitable physiology for animals, then, the cross-linked hyaluronic acid was homogenized.

A method to determine amount of cross-linking agent with free-state functional group in cross-linked hyaluronic acid comprises a hydrolysis step with hyaluronidase and the method used by Nelis and Sinsheimer (A sensitive Fluorimetric for the Determination of Aliphatic Epoxides under Physiological Conditions, Anal. Biochem., Vol. 115, pp. 151-157, 1981). A calibration of the above-mentioned method provides a good linear model when the content of cross-linking agent with free-state functional group is between 1 and 300 ppm in cross-linked hyaluronic acid.

0.1 g of cross-linked hyaluronic acid was added to a 50 mL certified volumetric flask and 3 mL of 6 N sulfuric acid solution added to dissolve cross-linked hyaluronic acid. After cross-linked hyaluronic acid was dissolved, deionized water was added by a scale of the certified volumetric flask. Then, using the method of European Pharmacopoeia 4.0 (2002) glucuronic acid content was determined for calculating cross-linked hyaluronic acid content. The cross-linked hyaluronic acid content and content of residual cross-linking agent with free-state functional group in product were recorded at different reaction times as shown in table 1.

EXAMPLE 2: Sodium hyaluronate concentration of 20 w/v %, base concentration of 0.5 N, low reaction temperature of 30°C and cross-linking agent (1,3-butadiene diepoxide) concentration of 1 v/v %.

The method of example 1 was followed except the cross-linking agent was 1,3-butadiene diepoxide. The cross-linked hyaluronic acid content and content of residual cross-linking agent with free-state functional group were recorded at different reaction times as shown in table 1.

EXAMPLE 3: Sodium hyaluronate concentration of 20 w/v %, base concentration of 0.25 N, low reaction temperature of 10°C and cross-linking agent (1,4-butanediol diglycidyl ether) concentration of 1 v/v %.

9.4 mL of deionized water was added to 0.5 mL of 5N sodium hydroxide solution, 0.1 mL of 1,4-butanedion diglycidyl ether and 2 g (dry weight) sodium hyaluronate of high molecular weight hyaluronic acid (HHA, average molecular weight 1,350,000) under constant stirring by a magnetic stirring bar at the room temperature for 5 minutes and placed in a thermostatic container maintained at 10°C for reaction times shown in table 1. The cross-linked hyaluronic acid was added to 79.6 mL of pH 7.0±0.2 of 0.1 M phosphate buffer solution and 0.4 mL of 6 N hydrogen chloride solution to regulate pH value and osmotic pressure adjusted to suitable physiology for animals. Then, the cross-linked hyaluronic acid was homogenized.

The method to determine amount of cross-linking agent with free-state functional group in cross-linked hyaluronic acid in example 1 was used. The cross-linked hyaluronic acid content and content of residual cross-linking agent with free-state functional group were recorded at different reaction times as shown in table 1.

EXAMPLE 4: Sodium hyaluronate concentration of 20 w/v %, base concentration of 0.25 N, low reaction temperature of 20°C and cross-linking agent (1,4-butanediol diglycidyl ether) concentration of 1 v/v %.

The method of the example 3 was used, except the low reaction temperature was varied. The cross-linked hyaluronic acid content and content of residual cross-linking agent with free-state functional group were recorded at different reaction times as shown in table 1.

EXAMPLE 5: Sodium hyaluronate concentration of 20 w/v %, base concentration of 0.25 N, low reaction temperature of 30°C and cross-linking agent (1,4-butanediol diglycidyl ether) concentration of 1 v/v %.

The method of example 3 was used, except the low reaction temperature was varied. The cross-linked hyaluronic acid content and content of residual cross-linking agent with free-state functional group were recorded at different reaction times as shown in table 1.

EXAMPLE 6: Sodium hyaluronate concentration of 20 w/v %, base concentration of 0.2 N, low reaction temperature of 30°C and cross-linking agent (1,4-butanediol diglycidyl ether) concentration of 1 v/v %.

9.5 mL of deionized water was added to 0.4 mL of 5N sodium hydroxide solution, 0.1 mL of 1,4-butanedion diglycidyl ether and 2 g (dry weight) hyaluronic acid of high molecular weight hyaluronic acid (HHA, average molecular weight 1,350,000) under constant stirring by a magnetic stirring bar at the room temperature for 5 minutes and were placed in a thermostatic container maintained at 30°C for reaction times shown in table 1. The cross-linked hyaluronic acid was added into 79.68 mL of pH 7.0±0.2 of 0.1 M phosphate buffer solution and 0.32 mL of 6 N hydrogen chloride solution to regulate the pH value and osmotic pressure adjusted to suitable physiology for animals. Then, the cross-linked hyaluronic acid was homogenized.

The method to determine amount of cross-linking agent with free-state functional group in cross-linked hyaluronic acid was the same as example 1. The cross-linked hyaluronic acid content and content of residual cross-linking agent with free-state functional group were recorded at different reaction times as shown in table 1.

Table 1 shows that as the reaction time of the cross-linking reaction over 2 days, the cross-linked hyaluronic acid can be used for animals.

**Table 1**

| Example | Reaction temperature (°C) | Reaction time (day) | Cross-linked hyaluronic acid content (w/v %) in product | cross-linking agent with free-state functional group (ppm) in product |
|---|---|---|---|---|
| 1 | 30 | 1 | 1.85 | 64.64 |
| | | 2 | 1.91 | 5.68 |
| | | 3 | 1.89 | 3.15 |
| | | 4 | 1.86 | <1* |
| 2 | 30 | 1 | 1.94 | 15.95 |
| | | 2 | 1.89 | 4.25 |
| | | 3 | 1.96 | <1* |
| 3 | 10 | 14 | 2.09 | 42.67 |
| | | 21 | 2.06 | 12.16 |
| | | 28 | 1.95 | <1* |
| 4 | 20 | 1 | 2.02 | 441.08 |
| | | 3 | 1.95 | 157.04 |
| | | 5 | 2.05 | 47.32 |
| | | 7 | 1.98 | 9.26 |
| | | 9 | 1.98 | 1.71 |
| | | 11 | 1.98 | <1* |
| 5 | 30 | 1 | 1.91 | 167.91 |
| | | 2 | 1.97 | 30.25 |
| | | 3 | 1.94 | 9.87 |
| | | 4 | 1.83 | 1.89 |
| | | 5 | 1.95 | <1* |
| 6 | 30 | 1 | 1.95 | 247.69 |
| | | 2 | 2.00 | 79.92 |
| | | 3 | 2.03 | 24.38 |
| | | 4 | 1.82 | 9.05 |
| | | 5 | 1.95 | 4.57 |
| | | 6 | 1.90 | 2.51 |
| | | 7 | 1.98 | <1* |
| Note: * represents it is not in the range of calibration (between 1 to 300 ppm). | | | | |

EXAMPLE 7: Sodium hyaluronate concentration of 10 w/v %, base concentration of 0.05 N, high reaction temperature of 50°C, low reaction temperature of 30°C and cross-linking agent (1,4-butanediol diglycidyl ether) concentration of 1 v/v %.

9.8 mL of deionized water was added to 0.1 mL of 5N sodium hydroxide solution, 0.1 mL of 1,4-butanedion diglycidyl ether and 1 g (dry weight) sodium hyaluronate of high molecular weight hyaluronic acid, HHA (average molecular weight 1,350,000) under continuous stirring by a magnetic stirring bar at room temperature for 5 minutes and were placed in a thermostatic container maintained at 50°C for 7 hours and then at 30°C for a specific reaction time shown in table 2.

The cross-linked hyaluronic acid was added to 9.87 mL of deionized water, 20 mL of pH 7.0±0.2 of 0.15 M phosphate buffer solution and 0.13 mL of 6 N hydrogen chloride solution to regulate the pH value and osmotic pressure adjusted to suitable physiology for animals. Then, the cross-linked hyaluronic acid was homogenized.

The method to determine amount of cross-linking agent with free-state functional group in cross-linked hyaluronic acid was the same as example 1. The cross-linked hyaluronic acid content and content of residual cross-linking agent with free-state functional group were recorded at different reaction times as shown in table 2.

EXAMPLE 8 : Sodium hyaluronate concentration of 20 w/v %, base concentration of 0.5 N, high reaction temperature of 40°C, low reaction temperature of 25°C and cross-linking agent (1,4-butanediol diglycidyl ether) concentration of 1 v/v %.

8.9 mL of deionized water were added to 1 mL of 5N sodium hydroxidesolution, 0.1 mL of 1,4-butanediol diglycidyl ether and 2.0 g (dry weight) sodium hyaluronate of high molecular weight hyaluronic acid, HHA (average molecular weight 1,350,000) under continuous stirring by a magnetic stirring bar at room temperature for 5 minutes and were placed in a thermostatic container held at 40°C for 3 hours and at 25°C for a specific reaction time shown in table 2.

The cross-linked hyaluronic acid was added to 79.2 mL of pH 7.0±0.2 of 0.073 M phosphate buffer solution and 0.8 mL of 6 N hydrogen chloride solution to regulate pH value and osmotic pressure adjusted to suitable physiology for animals. Then, the cross-linked hyaluronic acid was homogenized.

The method to determine amount of cross-linking agent with free-state functional group in cross-linked hyaluronic acid the same as example 1 was used. The cross-linked hyaluronic acid content and content of residual cross-linking agent with free-state functional group were recorded at different reaction times as shown in table 2.

EXAMPLE 9: Sodium hyaluronate concentration of 20 w/v %, base concentration of 0.5 N, high reaction temperature of 40°C, low reaction temperature of 25°C and cross-linking agent (1,2,7,8-diepoxyoctane) concentration of 1 v/v %.

The method of example 8 was used, except the cross-linking agent was 1,2,7,8-diepoxyoctane. The cross-linked hyaluronic acid content and content of residual cross-linking agent with free-state functional group were recorded at different reaction times as shown in table 2.

EXAMPLE 10: Sodium hyaluronate concentration of 20 w/v % (10 w/v % HHA and 10 w/v % LHA), base concentration of 0.25 N, high reaction temperature of 40°C, low reaction temperature of 10°C and cross-linking agent (1,4-butanediol diglycidyl ether) concentration of 0.6 v/v %.

9.44 mL of deionized water was added to 0.5 mL of 5N sodium hydroxide solution, 0.06 mL of 1,4-butanediol diglycidyl ether, 1 g (dry weight) of high molecular weight sodium hyaluronate, HHA (average molecular weight 1,350,000) and 1 g (dry weight) of low molecular weight sodium hyaluronate, LHA (average molecular weight 440,000) under continuous stirring by a magnetic stirring bar at the room temperature for 5 minutes and placed in a thermostatic container held at 40°C for 4 hours and then at 10°C for a specific reaction time shown in table 2.

The cross-linked hyaluronic acid was added to 79.6 mL of pH 7.0±0.2 of 0.1 M phosphate buffer solution and 0.4 mL of 6 N hydrogen chloride solution to regulate the pH value and osmotic pressure adjusted to suitable physiology for animals. Then, the cross-linked hyaluronic acid was homogenized.

The method to determine amount of cross-linking agent with free-state functional group in cross-linked hyaluronic acid in example 1 was used. The cross-linked hyaluronic acid content and content of residual cross-linking agent with free-state functional group were recorded at different reaction times as shown in table 2.

EXAMPLE 11: Sodium hyaluronate concentration of 30 w/v % (15 w/v % HHA and 15 w/v % LHA), base concentration of 0.25 N, high reaction temperature of 40°C, low reaction temperature of 25°C and cross-linking agent (1,4-butanedionl diglycidyl ether) concentration of 0.6 v/v %.

9.44 mL of deionized water was added to 0.5 mL of 5N sodium hydroxide solution, 0.06 mL of 1,4-butanediol diglycidyl ether, 1.5 g (dry weight) of high molecular weight sodium hyaluronate, HHA (average molecular weight 1,350,000) and 1.5 g (dry weight) of low molecular weight sodium hyaluronate, LHA (average molecular weight 440,000) under continuous stirring by a magnetic stirring bar at the room temperature for 5 minutes and placed in a thermostatic container held at 40°C for 4 hours and then at 25°C for a specific reaction time as shown in table 2.

The cross-linked hyaluronic acid was added to 79.6 mL of pH 7.0±0.2 of 0.10 M phosphate buffer solution and 0.4 mL of 6 N hydrogen chloride solution to regulate the pH value and osmotic pressure adjusted to suitable physiology for animals. Then, the cross-linked hyaluronic acid was homogenized.

The method to determine amount of cross-linking agent with free-state functional group in cross-linked hyaluronic acid of example 1 was used. The cross-linked hyaluronic acid content and content of residual cross-linking agent with free-state functional group were recorded at different reaction times as shown in table 2.

EXAMPLE 12: Sodium hyaluronate concentration of 20 w/v % LHA, base concentration of 0.25 N, high reaction temperature of 40°C , low reaction temperature of 25°C and cross-linking agent (1,4-butanediol diglycidyl ether) concentration of 0.6 v/v %.

The method of the example 11 was used except 2 g (dry weight) of low molecular weight sodium hyaluronate was used. The cross-linked hyaluronic acid content and content of residual cross-linking agent with free-state functional group were recorded at different reaction times as shown in table 2.

EXAMPLE 13 : Sodium hyaluronate concentration of 20 w/v % (10 w/v % HHA and 10 w/v % LHA), base concentration of 0.25 N, high reaction temperature of 40°C, low reaction temperature of 25°C and cross-linking agent (1,4-butanediol diglycidyl ether) concentration of 0.1 v/v %.

9.49 mL of deionized water was added to 0.5 mL of 5N sodium hydroxide solution, 0.01 mL of 1,4-butanediol diglycidyl ether, 1.0 g of high molecular weight sodium hyaluronate, HHA (average molecular weight 1,350,000) and 1.0 g of low molecular weight sodium hyaluronate, LHA (average molecular weight 440,000) under continuous stirring by a magnetic stirring bar at the room temperature for 5 minutes and placed in a thermostatic container held at 40°C for 4 hours and then at 25°C for a specific reaction time shown in table 2.

The cross-linked hyaluronic acid was added to 79.6 mL of pH 7.0±0.2 of 0.10 M phosphate buffer solution and 0.4 mL of 6 N hydrogen chloride solution to regulate the pH value and osmotic pressure adjusted to suitable physiology for animals. Then, the cross-linked hyaluronic acid was homogenized.

The method to determine amount of cross-linking agent with free-state functional group in cross-linked hyaluronic acid of example 1 was used. The cross-linked hyaluronic acid content and content of residual cross-linking agent with free-state functional group were recorded at different reaction times as shown in table 2.

EXAMPLE 14: Sodium hyaluronate concentration of 20 w/v % LHA, base concentration of 0.2 N, high reaction temperature of 40°C, low reaction temperature of 30°C and cross-linking agent (1,4-butanediol diglycidyl ether) concentration of 1 v/v %.

9.5 mL of deionized water was added to 0.4 mL of 5 N sodium hydroxide solution, 0.1 mL of 1,4-butanediol diglycidyl ether, 2.0 g (dry weight) of low molecular weight sodium hyaluronate, LHA (average molecular weight 440,000) under continuous stirring by a magnetic stirring bar at the room temperature for 5 minutes and placed in a thermostatic container held at 40°C for 4 hours and then at 30°C for a specific reaction time shown in table 2.

The cross-linked hyaluronic acid was added to 79.68 mL of pH 7.0±0.2 of 0.10 M phosphate buffer solution and 0.32 mL of 6 N hydrogen chloride solution to regulate the pH value and osmotic pressure adjusted to suitable physiology for animals. Then, the cross-linked hyaluronic acid was homogenized.

The method to determine amount of cross-linking agent with free-state functional group in cross-linked hyaluronic acid of example 1 was used. The cross-linked hyaluronic acid content and content of residual cross-linking agent with free-state functional group were recorded at different reaction times as shown in table 2.

EXAMPLE 15: Sodium hyaluronate concentration of 10 w/v % HHA, carboxymethyl cellulose (sodium salt) of 10 w/v %, base concentration of 0.3 N, high reaction temperature of 40°C, low reaction temperature of 20°C and cross-linking agent (1,4-butanediol diglycidyl ether) concentration of 0.6 v/v %.

9.34 mL of deionized water was added to 0.6 mL of 5 N sodium hydroxide solution, 0.4 g sodium chloride, 0.06 mL of 1,4-butanediol diglycidyl ether, 1.0 g (dry weight) of high molecular weight sodium hyaluronate, HHA, and 1.0 g (dry weight) of carboxymethyl cellulose (sodium salt) under continuous stirring by a magnetic stirring bar at the room temperature for 5 minutes and placed in a thermostatic container held at 40°C for 4 hours and then at 20°C for a specific reaction time shown in table 2.

The cross-linked hyaluronic acid was added to 79.50 mL of pH 7.0±0.2 of 0.01 M phosphate buffer solution and 0.5 mL of 6 N hydrogen chloride solution to regulate the pH value and osmotic pressure adjusted to suitable physiology for animals. Then, the cross-linked hyaluronic acid was homogenized.

The method to determine amount of cross-linking agent with free-state functional group in cross-linked hyaluronic acid of example 1 was used, except the hydrolysis enzyme was the mixture of hyaluronidase and cellulase (celluclast 1.5 L, Novo Nordisk Ferment Ltd.). The cross-linked hyaluronic acid content and content of residual cross-linking agent with free-state functional group were recorded at different reaction times as shown in table 2.

When the reaction time of the cross-linking reaction is over 2 days, the cross-linked hyaluronic acid can be used for animal.

**Table 2**

| Example | High temperature | | Low temperature | | Cross-linked hyaluronic acid content (w/v %) in product | cross-linking agent with free-state functional group (ppm) in product |
|---|---|---|---|---|---|---|
| | °C | Time (hours) | °C | Time (days) | | |
| 7 | 50 | 7 | 30 | 1 | 2.11 | 425.01* |
| | | | | 3 | 2.23 | 346.10* |
| | | | | 5 | 2.25 | 189.35 |
| | | | | 9 | 1.82 | 145.49 |
| | | | | 11 | 2.15 | 64.34 |
| | | | | 13 | 2.10 | 54.45 |
| | | | | 15 | 2.07 | 27.14 |
| | | | | 17 | 2.09 | 16.41 |
| | | | | 24 | 2.04 | 15.50 |
| | | | | 28 | 2.14 | 11.81 |
| 8 | 40 | 3 | 25 | 0 | 1.82 | 313.53* |
| | | | | 1 | 1.92 | 24.54 |
| | | | | 2 | 1.83 | 4.38 |
| | | | | 3 | 1.96 | <1* |
| 9 | 40 | 3 | 25 | 0 | 1.86 | 365.13* |
| | | | | 1 | 1.81 | 111.77 |
| | | | | 2 | 1.88 | 23.37 |
| | | | | 3 | 2.04 | 5.90 |
| | | | | 4 | 1.91 | <1* |
| 10 | 40 | 4 | 10 | 0 | 1.82 | 297.81 |
| | | | | 14 | 1.87 | 7.67 |
| | | | | 18 | 2.01 | 2.97 |
| | | | | 23 | 1.89 | <1 |
| 11 | 40 | 4 | 25 | 0 | 2.04 | 218.05 |
| | | | | 1 | 2.05 | 95.08 |
| | | | | 2 | 1.79 | 37.50 |
| | | | | 3 | 2.07 | 15.96 |
| | | | | 4 | 1.93 | 8.66 |
| | | | | 5 | 1.90 | <1 |
| 12 | 40 | 4 | 25 | 0 | 1.98 | 331.94* |
| | | | | 1 | 1.86 | 123.51 |
| | | | | 2 | 1.99 | 54.89 |
| | | | | 3 | 1.81 | 21.44 |
| | | | | 4 | 1.77 | 10.58 |
| | | | | 5 | 1.87 | <1* |
| 13 | 40 | 4 | 25 | 0 | 1.91 | 46.27 |
| | | | | 1 | 1.91 | 19.62 |
| | | | | 2 | 1.94 | 5.37 |
| | | | | 3 | 1.79 | <1 |
| 14 | 40 | 4 | 30 | 1 | 1.86 | 162.98 |
| | | | | 2 | 1.87 | 50.66 |
| | | | | 3 | 1.97 | 16.09 |
| | | | | 4 | 1.81 | 5.42 |
| | | | | 5 | 1.80 | 1.32 |
| | | | | 6 | 1.78 | <1* |
| 15 | 40 | 4 | 20 | 1 | 2 | 162.21 |
| | | | | 2 | 2 | 73.14 |
| | | | | 3 | 2 | 29.35 |
| | | | | 4 | 2 | 11.13 |
| | | | | 5 | 2 | 3.04 |
| | | | | 6 | 2 | 1.02 |
| | | | | 7 | 2 | <1* |
| Note: * represents it is not in the range of calibration (between 1 to 300 ppm). | | | | | | |

The cross-linked hyaluronic acid in example 15 is about sodium hyaluronate concentration of 1 w/v % HHA and carboxymethyl cellulose of 1 w/v %.

Even though numerous characteristics and advantages of the present invention have been set forth in the foregoing description, together with details of the structure and function of the invention, the disclosure is illustrative only.

## Claims

1. A method for producing cross-linked hyaluronic acid comprising:
(a) cross-linking a polymer at high temperature from 35 to 60°C ; and
(b) cross-linking the polymer at low temperature, between 10 to 30°C, for a reaction time more than 48 hours with a cross-linking agent to form a cross-linked hyaluronic acid under basic conditions prepared by an inorganic base with a concentration from 0.2 N to 1.5 N, wherein
step (a) is conducted before step (b);
the polymer is selected from the group consisting of hyaluronic acid, hyaluronate, and a mixture thereof, and
wherein the method is absent of a step of purifying the cross-linked hyaluronic acid.

2. The method for producing cross-linked hyaluronic acid as claimed in claim 1, wherein the hyaluronate is selected from the group consisting of sodium hyaluronate, potassium hyaluronate and zinc hyaluronate.

3. The method for producing cross-linked hyaluronic acid as claimed in claim 1, wherein the inorganic base is with a concentration from 0.2 N to 0.5 N.

4. The method for producing cross-linked hyaluronic acid as claimed in claim 1, wherein the inorganic base is selected from the group consisting of sodium hydroxide, potassium hydroxide and a mixture thereof.

5. The method for producing cross-linked hyaluronic acid as claimed in claim 1, wherein the cross-linking agent is a multifunctional cross-linking agent.

6. The method for producing cross-linked hyaluronic acid as claimed in claim 5, wherein the cross-linking agent is a di-functional cross-linking agent.

7. The method for producing cross-linked hyaluronic acid as claimed in claim 6, wherein the cross-linking agent is selected from the group consisting of 1,4-butancdiol diglycidyl ether, ethylene glycol diglycidyl ether, 1,6-hexanediol diglycidyl ether, polypropylene glycol diglycidyl ether, polytetramethylene glycol diglycidyl ether, neopentyl glycol diglycidyl ether, polyglycerol polyglycidyl ester, diglycerol polyglycidyl ether, glycerol polyglycidyl ether, trimethylolpropane polyglycidyl ether, pentaerythritol polyglyglycidyl ether, sorbitol polyglycidyl ether, 1,2,7,8-diepoxyoctane, 1,3-butadiene diepoxide and a mixture thereof.

8. The method for producing cross-linked hyaluronic acid as claimed in claim 5, wherein a concentration of the cross-linking agent is from 0.05 to 2 w/v%.

9. The method for producing cross-linked hyaluronic acid as claimed in claim 1, wherein the low temperature is from 15 to 30°C.

10. The method for producing cross-linked hyaluronic acid as claimed in claim 9, wherein the low temperature is from 20 to 30°C.

11. The method for producing cross-linked hyaluronic acid as claimed in claim 1 or claim 3, wherein the reaction time is between 3 and 28 days.

12. The method for producing cross-linked hyaluronic acid as claimed in claim 1, wherein a concentration of the polymer is between 2 and 40 w/v%.

13. The method for producing cross-linked hyaluronic acid as claimed in claim 1, having a step of diluting the cross-linked hyaluronic acid after the step of cross-linking at low temperature.

14. The method for producing cross-linked hyaluronic acid as claimed in claim 1, further having a step of neutralizing cross-linking reaction environment step after the step of cross-linking at low temperature for neutralizing original non-neutral reaction environment.

15. The method for producing cross-linked hyaluronic acid as claimed in claim 1, further having a step of homogenizing the cross-linked hyaluronic acid after the step of cross-linking at low temperature.

16. The method for producing cross-linked hyaluronic acid as claimed in claim 1, wherein the content of the polymer is between 5 mg/mL and 60 mg/mL.

17. The method for producing cross-linked hyaluronic acid as claimed in claim 1, wherein:
when the high temperature is 35°C, a reaction time in the step (a) is less than 72 hours;
when the high temperature is 40°C, a reaction time in the step (a) is less than 48 hours;
when the high temperature is 50°C, a reaction time in the step (a) is less than 8 hours; and
when the high temperature is 60°C, a reaction time in the step (a) is less than 2 hours.

## Patentansprüche

1. Verfahren zur Herstellung vernetzter Hyaluronsäure welches umfasst:
(a) Vernetzen eines Polymer bei hoher Temperatur von 35 bis 60°C ; und
(b) Vernetzen des Polymers bei niedriger Temperatur, zwischen 10 bis 30°C, für eine Reaktionszeit von mehr als 48 Stunden mit einem Vernetzungsmittel zur Bildung von vernetzter Hyaluronsäure unter basischen Bedingungen, welche durch eine anorganische Base mit einer Konzentration von 0,2 N bis 1,5 N erstellt wurden, wobei
Schritt (a) vor Schritt (b) durchgeführt wird;
worin das Polymer ausgewählt ist aus der Gruppe bestehend aus Hyaluronsäure, Hyaluronat und einem Gemisch davon, und
wobei das Verfahren keinen Schritt der Reinigung der vernetzten Hyaluronsäure umfasst.

2. Verfahren zur Herstellung von vernetzter Hyaluronsäure nach Anspruch 1, wobei das Hyaluronat ausgewählt ist aus der Gruppe bestehend aus Natrium-Hyaluronat, Kalium-Hyaluronat und Zink-Hyaluronat.

3. Verfahren zur Herstellung von vernetzter Hyaluronsäure nach Anspruch 1, wobei die anorganische Base eine Konzentration von 0,2 N bis 0,5 N aufweist.

4. Verfahren zur Herstellung von vernetzter Hyaluronsäure nach Anspruch 1, wobei die anorganische Base ausgewählt ist aus der Gruppe bestehend aus Natriumhydroxid, Kaliumhydroxid und einem Gemisch davon.

5. Verfahren zur Herstellung von vernetzter Hyaluronsäure nach Anspruch 1, wobei das Vernetzungsmittel ein multifunktionales Vernetzungsmittel ist.

6. Verfahren zur Herstellung von vernetzter Hyaluronsäure nach Anspruch 5, wobei das Vernetzungsmittel ein bifunktionales Vernetzungsmittel ist.

7. Verfahren zur Herstellung von vernetzter Hyaluronsäure nach Anspruch 6, wobei das Vernetzungsmittel ausgewählt ist aus der Gruppe bestehend aus 1,4-Butandioldiglycidylether, Ethylenglycoldiglycidylether, 1,6-Hexanedioldiglycidylether, Polypropyleneglycoldiglycidylether, Polytetramethylenglycoldiglycidylether, Neopentylglycoldiglycidylether, Polyglycerolpolyglycidylester, Diglycerolpolyglycidylether, Glycerolpolyglycidylether, Trimethylolpropanpolyglycidylether, Pentaerythritolpolyglyglycidylether, Sorbitolpolyglycidylether, 1,2,7,8-Diepoxyoctan, 1,3-Butadienediepoxid and einem Gemisch davon.

8. Verfahren zur Herstellung von vernetzter Hyaluronsäure nach Anspruch 5, wobei eine Konzentration des Vernetzungsmittels von 0,05 bis 2 Gew.-%/Vol.-% liegt.

9. Verfahren zur Herstellung von vernetzter Hyaluronsäure nach Anspruch 1, wobei die niedrige Temperatur von 15 bis 30°C ist.

10. Verfahren zur Herstellung von vernetzter Hyaluronsäure nach Anspruch 9, wobei die niedrige Temperatur von 20 bis 30°C ist.

11. Verfahren zur Herstellung von vernetzter Hyaluronsäure nach Anspruch 1 oder Anspruch 3, wobei die Reaktionszeit zwischen 3 and 28 Tagen liegt.

12. Verfahren zur Herstellung von vernetzter Hyaluronsäure nach Anspruch 1, wobei eine Konzentration des Polymers zwischen 2 und 40 Gew.-%/Vol-% liegt

13. Verfahren zur Herstellung von vernetzter Hyaluronsäure nach Anspruch 1, welche einen Schritt des Verdünnens der vernetzten Hyaluronsäure nach dem Schritt des Vernetzens bei niedriger Temperatur umfasst.

14. Verfahren zur Herstellung von vernetzter Hyaluronsäure nach Anspruch 1, welches weiter einen Schritt des Neutralisierens der Vernetzungsreaktionsumgebungs nach dem Schritt des Vernetzens bei niedriger Temperatur umfasst, um die ursprüngliche nicht-neutrale Reaktionsumgebung zu neutralisieren.

15. Verfahren zur Herstellung von vernetzter Hyaluronsäure nach Anspruch 1, welches weiter einen Schritt des Homogenisierens der vernetzten Hyaluronsäure nach dem Schritt des Vernetzens bei niedriger Temperatur umfasst.

16. Verfahren zur Herstellung von vernetzter Hyaluronsäure nach Anspruch 1, wobei der Gehalt an Polymer zwischen 5 mg/ml und 60 mg/ml liegt.

17. Verfahren zur Herstellung von vernetzter Hyaluronsäure nach Anspruch 1, wobei:
wenn die hohe Temperatur 35 °C ist, dann beträgt eine Reaktionszeit in dem Schritt (a) weniger als 72 Stunden;
wenn die hohe Temperatur 40 °C ist, dann beträgt eine Reaktionszeit in dem Schritt (a) weniger als 48 Stunden;
wenn die hohe Temperatur 50 °C ist, dann beträgt eine Reaktionszeit in dem Schritt (a) weniger als 8 Stunden; and
wenn die hohe Temperatur 60 °C ist, dann beträgt eine Reaktionszeit in dem Schritt (a) weniger als 2 Stunden.

## Revendications

1. Procédé de production d'acide hyaluronique réticulé comprenant :
(a) la réticulation d'un polymère à haute température de 35 à 60°C ; et
(b) la réticulation du polymère à basse température entre 10 à 30°C, pendant un temps de réaction de plus de 48 heures avec un agent de réticulation pour former un acide hyaluronique réticulé dans des conditions basiques préparées par une base inorganique présentant une concentration de 0,2 N à 1,5 N,
l'étape (a) étant réalisée avant l'étape (b) ;
le polymère étant sélectionné dans le groupe constitué par l'acide hyaluronique, l'hyaluronate et un mélange de ceux-ci, et
le procédé étant dépourvu d'une étape de purification de l'acide hyaluronique réticulé.

2. Procédé de production d'acide hyaluronique réticulé, selon la revendication 1, l'hyaluronate étant sélectionné dans le groupe constitué par l'hyaluronate de sodium, l'hyaluronate de potassium et l'hyaluronate de zinc.

3. Procédé de production d'acide hyaluronique réticulé selon la revendication 1, la base inorganique présentant une concentration de 0,2 N à 0,5 N.

4. Procédé de production d'acide hyaluronique réticulé selon la revendication 1, la base inorganique étant sélectionnée dans le groupe constitué par l'hydroxyde de sodium, l'hydroxyde de potassium et un mélange de ceux-ci.

5. Procédé de production d'acide hyaluronique réticulé selon la revendication 1, l'agent de réticulation étant un agent de réticulation multifonctionnel.

6. Procédé de production d'acide hyaluronique réticulé selon la revendication 5, l'agent de réticulation étant un agent de réticulation difonctionnel.

7. Procédé de production d'acide hyaluronique réticulé selon la revendication 6, l'agent de réticulation étant sélectionné dans le groupe constitué par le 1,4-butanediol-diglycidyl-éther, l'éthylèneglycol-diglycidyl-éther, le 1,6-hexanediol-diglycidyl-éther, le polypropylèneglycol-diglycidyl-éther, le polytétraméthylèneglycol-diglycidyl-éther, le néopentylglycol-diglycidyl-éther, le polyglycérol-polyglycidyl-éther, le diglycérol-polyglycidyl-éther, le glycérol-polyglycidyl-éther, le triméthylolpropane-polyglycidyl-éther, le pentaérythritol-polyglycidyl-éther, le sorbitol-polyglycidyl-éther, le 1,2,7,8-diépoxyoctane, le diépoxyde de 1,3-butadiène et un mélange de ceux-ci.

8. Procédé de production d'acide hyaluronique réticulé selon la revendication 5, une concentration de l'agent de réticulation étant de 0,05 à 2% en poids par volume.

9. Procédé de production d'acide hyaluronique réticulé selon la revendication 1, la basse température étant de 15 à 30°C.

10. Procédé de production d'acide hyaluronique réticulé selon la revendication 9, la température basse étant de 20 à 30°C.

11. Procédé de production d'acide hyaluronique réticulé selon la revendication 1 ou la revendication 3, le temps de réaction étant situé entre 3 et 28 jours.

12. Procédé de production d'acide hyaluronique réticulé selon la revendication 1, une concentration du polymère étant située entre 2 et 40% en poids par volume.

13. Procédé de production d'acide hyaluronique réticulé selon la revendication 1, présentant une étape de dilution de l'acide hyaluronique réticulé après l'étape de réticulation à basse température.

14. Procédé de production d'acide hyaluronique réticulé selon la revendication 1, présentant en outre une étape de neutralisation de l'étape de l'environnement de réaction de réticulation après l'étape de réticulation à basse température pour neutraliser l'environnement de réaction d'origine non neutre.

15. Procédé de production d'acide hyaluronique réticulé selon la revendication 1, présentant en outre une étape d'homogénéisation de l'acide hyaluronique réticulé après l'étape de réticulation à basse température.

16. Procédé de production d'acide hyaluronique réticulé selon la revendication 1, la teneur en polymère étant située entre 5 mg/ml et 60 mg/ml.

17. Procédé de production d'acide hyaluronique réticulé selon la revendication 1, où, lorsque la température élevée est de 35°C, un temps de réaction dans l'étape (a) est inférieur à 72 heures ;
lorsque la température élevée est de 40°C, un temps de réaction dans l'étape (a) est inférieur à 48 heures ;
lorsque la température élevée est de 50°C, un temps de réaction de l'étape (a) est inférieur à 8 heures ;
et
lorsque la température élevée est de 60°C, un temps de réaction de l'étape (a) est inférieur à 2 heures.
